# EUROPÄISCHE PATENTANMELDUNG

(11) **EP 3 594 055 A1**
(43) Veröffentlichungstag der Anmeldung: **15.01.2020**
(21) Anmeldenummer: 19184868.8
(22) Anmeldetag: 08.07.2019
(51) Int. Cl.: B60N 2/68, B60N 2/34, B60N 2/42

(54) **SITZGESTELL FÜR EINE SITZANORDNUNG EINES FAHRZEUGS**

(30) Priorität: 13.07.2018 DE 102018117026
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Sitzgestell (37) für eine Sitzanordnung eines Fahrzeugs, wobei das Sitzgestell einen Sitzunterbau, eine Sitzflächentragstruktur (3), eine Anbindungsstruktur (4) und eine Rückenlehnentragstruktur aufweist, wobei der Sitzunterbau dazu ausgebildet ist, an einem Fahrzeugboden eines Fahrzeugs angeordnet zu werden, wobei die Sitzflächentragstruktur ausgebildet ist, ein Sitzflächenelement der Sitzanordnung daran zu befestigen, wobei die Sitzflächentragstruktur beweglich am Sitzunterbau und/oder beweglich an der Anbindungsstruktur angelenkt ist, wobei die Rückenlehnentragstruktur dazu ausgebildet ist, ein Rückenlehnenelement der Sitzanordnung daran zu befestigen, wobei die Rückenlehnentragstruktur schwenkbeweglich am Sitzunterbau angelenkt ist. Das Sitzgestell kennzeichnet sich dadurch, dass das Sitzgestell derart vorhanden ist, dass die Rückenlehnentragstruktur aus einer ersten Nutzposition des Sitzgestells in eine zweite Nutzposition des Sitzgestells schwenkbar ist, wobei in der zweiten Nutzposition die Rückenlehnentragstruktur an die Sitzflächentragstruktur angreift und die Sitzflächentragstruktur aus der ersten Nutzposition in die zweite Nutzposition drängt.

## Beschreibung

### Stand der Technik

Im Fahrzeugbereich sind unterschiedliche Sitzanordnungen bekannt, die als Einzelsitz oder Sitzbank ausgeführt sind. Für eine erweiterte Nutzungsmöglichkeit ist es zudem bekannt, eine Sitzanordnung in einem Kraftfahrzeug zum Beispiel einem Pkw oder einem Nutzfahrzeug, wie z.B. einem Wohnmobil, in eine Liegeanordnung umzubauen. Hierzu wird beispielsweise ein Rückenflächenelement der Sitzanordnung relativ zu einem Sitzflächenelement abgesenkt.

Bei einem Sitzflächenelement der Sitzanordnung kann es gewünscht sein, dass dieses nach vorne etwas ansteigt, um den sogenannten "Diving-Effekt" einer sitzenden Person bei einer Aufprallsituation des Fahrzeuges zu vermeiden, also ein Durchrutschen nach vorne, entlang des Sitzflächenelements und ggf. unterhalb eines angelegten Sicherheitsgurtes.

Bei bekannten Sitzanordnungen ist ein Umbau bzw. Verstellen der Sitzanordnung aus einer Sitzposition in eine Liegeposition zum Erreichen einer vergleichsweise ebenen Liegefläche unter anderem aus voran genannten Gründen vergleichsweise aufwändig und technisch aufwändig realisiert.

### Aufgabe und Vorteile der Erfindung

Aufgabe der vorliegenden Erfindung ist es, eine Sitzanordnung der vorgenannten Art im Hinblick auf eine Umwandlung in eine Liegeanordnung zu verbessern.

Diese Aufgabe wird durch den unabhängigen Anspruch 1 gelöst.

In den abhängigen Ansprüchen sind vorteilhafte Weiterbildungen der Erfindung aufgezeigt.

Die Erfindung geht von einem Sitzgestell für eine Sitzanordnung eines Fahrzeugs aus, wobei das Sitzgestell einen Sitzunterbau, eine Sitzflächentragstruktur, eine Anbindungsstruktur und eine Rückenlehnentragstruktur aufweist, wobei der Sitzunterbau dazu ausgebildet ist, an einem Fahrzeugboden eines Fahrzeugs angeordnet zu werden, wobei die Sitzflächentragstruktur ausgebildet ist, ein Sitzflächenelement der Sitzanordnung daran zu befestigen, wobei die Sitzflächentragstruktur beweglich am Sitzunterbau und/oder beweglich an der Anbindungsstruktur angelenkt ist, wobei die Rückenlehnentragstruktur dazu ausgebildet ist, ein Rückenlehnenelement der Sitzanordnung daran zu befestigen, wobei die Rückenlehnentragstruktur schwenkbeweglich am Sitzunterbau angelenkt ist.

Die Rückenlehnentragstruktur und die Sitzflächentragstruktur, sind vorteilhafterweise getrennt voneinander vorhanden. Das Rückenlehnenelement und das Sitzflächenelement sind bevorzugterweise getrennt voneinander vorhanden. Bevorzugterweise sind die Rückenlehnentragstruktur und die Sitzflächentragstruktur nicht miteinander verbunden, insbesondere nicht unmittelbar miteinander verbunden. Vorteilhafterweise sind das Rückenlehnenelement und das Sitzflächenelement nicht miteinander verbunden, insbesondere nicht unmittelbar miteinander verbunden.

Der Kern der Erfindung liegt darin, dass das Sitzgestell derart vorhanden ist, dass die Rückenlehnentragstruktur aus einer ersten Nutzposition des Sitzgestells in eine zweite Nutzposition des Sitzgestells schwenkbar ist, wobei in der zweiten Nutzposition die Rückenlehnentragstruktur an die Sitzflächentragstruktur angreift und die Sitzflächentragstruktur aus der ersten Nutzposition in die zweite Nutzposition drängt.

Mit der Erfindung wird zunächst insbesondere der Nutzkomfort der Sitzanordnung erhöht. So kann eine Liegeposition bzw. -anordnung geschaffen werden, deren bereitgestellte Liegefläche ideal für ein bequemes Liegen, insbesondere als eine eingeebnete, insbesondere ebene Fläche, ausgebildet ist. Dies steht im Gegensatz zu bekannten Anordnungen, bei denen in der Liegeanordnung erhöhte Bereiche, z.B. eine nach vorne etwas ansteigende Sitzfläche des Sitzflächenelements, nicht eingeebnet sind und als unbequem bzw. störend empfunden werden.

Die Rückenlehnentragstruktur greift vorteilhafterweise von unten, z.B. aus Richtung des Fahrzeugbodens an die Sitzflächentragstruktur an. Bevorzugterweise ist die Sitzanordnung als ein Fahrzeugsitz, insbesondere als eine Fahrzeugsitzbank ausgebildet. Das Sitzgestell ist vorteilhafterweise als ein Sitzgestell eines Fahrzeugsitz, insbesondere einer Sitz- und Liegebank ausgebildet. Das Sitzgestell ist beispielsweise ein Sitz- und/oder Liegebankgestell. Vorteilhafterweise bildet das Sitzgestell in der ersten Nutzposition eine Sitzanordnung, z.B. einen Fahrzeugsitz oder eine Fahrzeugsitzbank für einen Passagier des Fahrzeugs. Beispielsweise bildet das Sitzgestell in der zweiten Nutzposition eine Liegeanordnung, z.B. eine Liegebank oder ein Liegebett. Beispielsweise befindet sich das Sitzflächenelement, insbesondere die Sitzflächentragstruktur, in einer ersten Nutzposition, insbesondere in der ersten Nutzposition des Sitzgestells in einer angewinkelten Position, sodass die Sitzfläche des Sitzflächenelements nach vorne etwas ansteigt, um den sogenannten "Diving-Effekt" einer sitzenden Person bei einer Aufprallsituation des Fahrzeuges zu vermeiden. In einer zweiten Nutzposition, insbesondere in der zweiten Nutzposition des Sitzgestells ist das Sitzflächenelement, insbesondere die Sitzfläche des Sitzflächenelements insbesondere parallel zum Fahrzeugboden und/oder parallel zum Rückenlehnenelement, insbesondere parallel zu einer Nutzfläche, z.B. einer Anlehnfläche, des Rückenlehnenelements ausgerichtet vorhanden.

Auch erweist es sich von Vorteil, dass der Sitzunterbau und/oder die Anbindungsstruktur eine Auflagefläche für die Sitzflächentragstruktur aufweist, wobei eine insbesondere erste Rückenlehnenstrebe der Rückenlehnentragstruktur sich in einer ersten Nutzposition quer zur Auflagefläche des Sitzunterbaus und/oder quer zur Auflagefläche der Anbindungsstruktur von einem ersten Strebenende bis zu einem zweiten Strebenende erstreckt, wobei die Rückenlehnenstrebe zumindest im Bereich einer der Auflageflächen schwenkbeweglich am Sitzunterbau und/oder schwenkbeweglich an der Anbindungsstruktur angelenkt ist, wobei das erste Strebenende in einem Bereich unterhalb zumindest einer der Auflagefläche vorhanden ist und das zweite Strebenende in einem Bereich oberhalb zumindest einer der Auflagefläche vorhanden ist. Bevorzugterweise ist die Rückenlehnenstrebe im Bereich beider Auflageflächen schwenkbeweglich am Sitzunterbau und/oder schwenkbeweglich an der Anbindungsstruktur angelenkt, wobei das erste Strebenende in einem Bereich unterhalb der Auflageflächen vorhanden ist und das zweite Strebenende in einem Bereich oberhalb der Auflageflächen vorhanden ist. Denkbar ist, dass die Anbindungsstruktur Teil des Sitzunterbaus ist. Vorstellbar ist aber auch, dass der Sitzunterbau als ein Standardsitzunterbau ausgebildet ist. Z.B. ist der Sitzunterbau ein reines Zukaufteil, insbesondere einstückig ausgebildet. Vorteilhafterweise sind der Sitzunterbau und die Anbindungsstruktur somit zwei voneinander separat herzustellende Teile, welche beispielsweise miteinander insbesondere unlösbar verbindbar sind.

Eine Auflagefläche für die Sitzflächentragstruktur erstreckt sich vorteilhafterweise in einer Ebene. Beispielsweise erstrecken sich die Auflagefläche des Sitzunterbaus in einer ersten Ebene und die Auflagefläche der Anbindungsstruktur in einer weiteren Ebene. Vorteilhafterweise sind die Erstreckungsebene der Auflagefläche des Sitzunterbaus und die Erstreckungsebene der Auflagefläche der Anbindungsstruktur parallel zueinander ausgerichtet. Beispielsweise fallen die beiden Erstreckungsebenen der Auflageflächen des Sitzunterbaus und der Anbindungsstruktur zusammen. Eine der Erstreckungsebenen der Auflageflächen ist beispielsweise zumindest annähernd horizontal vorhanden. Unter annähernd horizontal wird z.B. eine Winkel-Abweichung von einer horizontal ausgerichteten Ebene im Bereich zwischen +10° und -10°, insbesondere zwischen +5° und - 5° verstanden. Der Sitzunterbau ist beispielsweise rahmenartig und/oder kastenartig ausgebildet. Die Anbindungsstruktur und/oder eine der, insbesondere beide, Auflageflächen ist beispielsweiser rahmenartig vorhanden. Vorteilhafterweise sind Elemente des Sitzunterbaus aus Metall ausgebildet. Beispielsweise aus Rohren, insbesondere Vierkantrohren und/oder Profilelemente, z.B. L-Profilen, V-Profilen und/oder U-Profilen.

Der Sitzunterbau umfasst vorteilhafterweise ein sich horizontal erstreckendes Anbindungsorgan, welches dazu ausgebildet ist, mit einem Fahrzeugboden eines Fahrzeugs verbunden zu werden. Das Anbindungsorgan erstreckt sich entlang seiner Längsachse vorteilhafterweise in Sitzrichtung. Weiter umfasst der Sitzunterbau zwei Sitzunterbaustützen, welche sich quer zur Auflagefläche, quer zur Anbindungsstruktur und/oder quer zum Anbindungsorgan erstrecken. Mittels der Sitzunterbaustützen ist die Anbindungsstruktur insbesondere die Sitzflächentragstruktur gegenüber dem Fahrzeugboden, beispielsweise gegenüber dem Anbindungsorgan beabstandet und abgestützt vorhanden.

Bevorzugterweise umfasst der Sitzunterbau weiterhin einen Stützfuß, welcher sich beispielsweise zwischen den Sitzunterbaustützen erstreckt. Der Stützfuß verläuft vorteilhafterweise ausgehend von der Anbindungsstruktur nach vorne unten, in Richtung einer Sitzunterbaustütze und in Richtung des Fahrzeugbodens, bzw. in Richtung des Anbindungsorgans. Vorteilhafterweise ist der Stützfuß derart ausgebildet und derart am Sitzunterbau vorhanden, dass bei einem Crashfall auftretende Kräfte am Sitzgestell nach vorne unten übertragbar sind. Die Anbindungsstruktur bildet beispielsweise einen oberen Rahmen des Sitzunterbaus.

Das erste Strebenende der Rückenlehnenstrebe endet beispielsweise in einem Bereich des Anbindungsorgans und/oder des Fahrzeugbodens. Vorstellbar ist, dass der Sitzunterbau zwei oder mehr Anbindungsorgane aufweist. Zwei Anbindungsorgane und/oder zwei Sitzunterbaustützen sind vorteilhafterweise durch ein Halteelement, z.B. in Form einer Querstrebe, welche sich quer zu einer Sitzrichtung des Sitzgestells bzw. des Fahrzeugsitzes des Sitzgestells erstreckt, miteinander verbunden. Vorteilhafterweise steht die Rückenlehnenstrebe in der ersten Nutzposition mit dem ersten Strebenende am Halteelement, z.B. der Querstrebe, dem Anbindungsorgan und/oder dem Fahrzeugboden an.

Das zweite Strebenende der Rückenlehnenstrebe endet vorteilhafterweise in einem Kopf- und/oder Schulterbereich des Sitzgestells bzw. des Fahrzeugsitz. Beispielsweise ist im Bereich des zweiten Strebenendes eine Kopfstütze des Fahrzeugsitzes anordenbar.

Weiter wird vorgeschlagen, dass der Sitzunterbau eine Ausnehmung aufweist, in welche die Sitzflächentragstruktur eingreifen kann, und/oder die Anbindungsstruktur eine Ausnehmung aufweist, in welche die Sitzflächentragstruktur eingreifen kann. Beispielsweise greift die Sitzflächentragstruktur zumindest in der ersten Nutzposition insbesondere von oben in die Ausnehmung ein. Vorstellbar ist auch, dass die Sitzflächentragstruktur in jeder Position in die Ausnehmung eingreift. Denkbar ist auch, dass die Anbindungsstruktur und/oder der Sitzunterbau keine Ausnehmung aufweist, in welche die Sitzflächentragstruktur eingreift. Beispielsweise liegt die Sitzflächentragstruktur, insbesondere in der ersten Nutzposition an der Auflagefläche der Anbindungsstruktur und/oder der Auflagefläche des Sitzunterbaus an. Vorteilhafterweise besitzt die Auflagefläche der Anbindungsstruktur und/oder die Auflagefläche des Sitzunterbaus eine Neigung in Sitzrichtung relativ zu einer Horizontalen. Die Neigung einer der Auflageflächen beträgt etwa 0° bis 10°, 0° bis 7° oder 3° bis 7°. Die Neigung beträgt etwa 1°, 2°, 3°, 4°, 6°, 7°, 8°, 9°, 10°, insbesondere etwa 5°.

Bevorzugterweise bildet zumindest ein Teil der Ausnehmung eine Auflagefläche für die Sitzflächentragstruktur in der ersten Nutzposition. Die Ausnehmung ist vorteilhafterweise in Sitzrichtung gesehen ausgehend von einem ersten Ende, welches sich im Bereich eines Anlenkpunkts der Rückenlehnentragstruktur am Sitzunterbau und/oder an der Anbindungsstruktur befindet, in Sitzrichtung keilartig zulaufend in Richtung eines zweiten Endes der Ausnehmung vorhanden. Die Ausnehmung der Anbindungsstruktur ist vorteilhafterweise keilförmig, insbesondere in einer Seitenansicht dreieckig ausgebildet.

Die Rückenlehnentragstruktur ist vorteilhafterweise drehbeweglich am Sitzunterbau und/oder drehbeweglich an der Anbindungsstruktur gelagert. Beispielsweise ist die Rückenlehnentragstruktur über ein Drehlager, z.B. ein Drehgelenk, drehbar mit dem Sitzunterbau und/oder der Anbindungsstruktur verbunden. Das Drehlager ist in vertikaler Richtung gesehen vorteilhafterweise in einem Bereich der Auflagefläche des Sitzunterbaus und/oder in einem Bereich der Auflagefläche der Anbindungsstruktur am Sitzunterbau und/oder an der Anbindungsstruktur vorhanden.

Auch ist es von Vorteil, dass die Sitzflächentragstruktur in der ersten Nutzposition derart am Sitzunterbau gelagert ist, dass ein an der Sitzflächentragstruktur angeordnetes Sitzflächenelement eine Sitzflächenneigung relativ zu einer Horizontalen aufweist.

Vorteilhafterweise besitzt eine Sitzfläche des Sitzflächenelements, insbesondere die Sitzflächentragstruktur, relativ zu einer Horizontalen, insbesondere relativ zu einem Fahrzeugboden in der ersten Nutzposition eine Neigung von etwa 5°. Das Sitzflächenelement ist beispielsweise als ein Sitzpolster eines Fahrzeugsitzes vorhanden, auf welchem eine Person zum Sitzen kommt. Die Sitzflächenneigung beträgt in der ersten Nutzposition des Sitzflächenelements etwa zwischen 1° bis 10°, zwischen 1° bis 7° oder zwischen 3° bis 7°. Die Sitzflächenneigung beträgt in der ersten Nutzposition des Sitzflächenelements etwa 1°, 2°, 3°, 4°, 6°, 7°, 8°, 9°, 10°, insbesondere etwa 5°.

Von Vorteil erweist sich ebenfalls, dass die Sitzflächentragstruktur in der zweiten Nutzposition derart am Sitzunterbau und/oder der Anbindungsstruktur und an der Rückenlehnentragstruktur gelagert ist, dass eine Sitzfläche des an der Sitzflächentragstruktur angeordneten Sitzflächenelements eine Ebene mit der Horizontalen bildet.

Vorteilhafterweise besitzt eine Sitzfläche des Sitzflächenelements, insbesondere die Sitzflächentragstruktur, relativ zu einem Fahrzeugboden in der zweiten Nutzposition keine Neigung relativ zur Horizontalen. Die Sitzflächenneigung beträgt in der zweiten Nutzposition etwa zwischen -1° bis +1°, insbesondere etwa, z.B. genau, 0° relativ zur Horizontalen und/oder einer Erstreckungsebene des Fahrzeugbodens.

Außerdem ist es von Vorteil, dass die Rückenlehnenstrebe der Rückenlehnentragstruktur in einer, insbesondere in der zweiten Nutzposition in die Ausnehmung des Sitzunterbaus und/oder in die Ausnehmung der Anbindungsstruktur eingreift. Beispielsweise greift die Rückenlehnenstrebe in der zweiten Nutzposition, insbesondere von unten, in eine Ausnehmung ein, insbesondere in beide Ausnehmungen, und kommt in Anlage mit der Sitzflächentragstruktur.

Vorteilhafterweise ist die Anbindungsstruktur U-förmig ausgebildet. Beispielsweise umfasst die Anbindungsstruktur ein U-Profil. Beispielswiese umfasst die Anbindungsstruktur zwei Seitenelemente und ein Verbindungselement, wobei das Verbindungselement die beiden Seitenelemente miteinander verbindet, sodass ein U-Profil realisiert ist. Beispielweise bildet eine Aussparung des Verbindungselements die Ausnehmung. Vorteilhafterweise durchgreift die Rückenlehnenstrebe die Anbindungsstruktur, insbesondere das Verbindungselement in der ersten Nutzposition. Beispielsweise ist die Rückenlehnenstrebe zwischen den beiden Seitenelementen der Anbindungsstruktur angeordnet. Beispielsweise ist die Rückenlehnenstrebe mit der Anbindungsstruktur in der zweiten Nutzposition in Anlage, insbesondere in Anlage mit dem Verbindungselement der Anbindungsstruktur.

Weiter wird vorgeschlagen, dass die Rückenlehnentragstruktur, insbesondere die Rückenlehnenstrebe, in der zweiten Nutzposition in einen Hohlraum des Sitzunterbaus und/oder in einen Hohlraum der Anbindungsstruktur eingreift. Vorteilhafterweise bildet das U-Profil der Anbindungsstruktur, insbesondere die Seitenelemente und das Verbindungselement einen Hohlraum aus, in welchen die Rückenlehnentragstruktur eingreift. Beispielsweise bildet die Ausnehmung einen Teil des Hohlraums.

In einer vorteilhaften Modifikation des Sitzgestells weist die Rückenlehnentragstruktur zwei Rückenlehnenstreben auf, wobei die beiden Rückenlehnenstreben über ein Scharnier miteinander verbunden sind. Das Scharnier ist beispielsweise als ein Rastscharnier ausgebildet. Insbesondere umfasst das Scharnier eine Arretierung. Vorteilhafterweise sind die beiden Rückenlehnenstreben der Rückenlehnenstragstruktur in der ersten Nutzposition des Sitzgestells abgewinkelt zueinander vorhanden. Ebenfalls ist es von Vorteil, dass die beiden Rückenlehnenstreben in der ersten Nutzposition einen Winkel kleiner 90° einschließen.

Ebenfalls ist es von Vorteil, dass die beiden Rückenlehnenstreben in der zweiten Nutzposition parallel zueinander ausgerichtet sind. Beispielsweise sind die beiden Rückenlehnenstreben der Rückenlehnenstragstruktur in der zweiten Nutzposition des Sitzgestells zueinander parallel verlaufend vorhanden. Vorteilhafterweise bildet eine zweite Rückenlehnenstrebe in der zweiten Nutzposition in Erstreckungsrichtung der ersten Rückenlehnenstrebe gesehen eine Verlängerung der ersten Rückenlehnenstrebe. Vorteilhafterweise erstrecken sich die beiden Rückenlehnenstreben in der zweiten Nutzposition in einer Ebene.

Auch ist es von Vorteil, dass ein Halteelement vorhanden ist, welches eine Schwenkbewegung einer Rückenlehnenstrebe, insbesondere der ersten Rückenlehnenstrebe, begrenzt. Das Halteelement ist beispielsweise als ein Haltegurt, z.B. als ein Band oder Gurtband, und/oder als eine Querstrebe, insbesondere als die vorangegangen genannte Querstrebe ausgebildet. Vorteilhafterweise ist das Halteelement derart vorhanden, dass insbesondere im Crash-Fall eine Bewegung des zweiten Strebenendes ausgehend von der ersten Nutzposition in Sitzrichtung des Sitzgestells verhindert, insbesondere blockiert ist. Das Halteelement bildet vorteilhafterweise einen Anschlag für die Rückenlehnenstrebe in der ersten Nutzposition. Vorteilhafterweise blockiert das Halteelement eine Schwenkbewegung, insbesondere eine Drehbewegung, insbesondere der ersten Rückenlehnenstrebe, um eine Achse des Drehlagers, in der ersten Nutzposition, in insbesondere eine einzige Schwenk- und/oder Drehrichtung.

Weiterhin erweist es sich von Vorteil, dass an einer Rückenlehnenstrebe, insbesondere an der zweiten Rückenlehnenstrebe und/oder an einem zweiten Rückenlehnenelement, der Rückenlehnentragstruktur ein Rastelement vorhanden ist, welches in der Sitzposition, insbesondere der ersten Nutzposition mit dem Sitzunterbau lösbar verrastet. Beispielsweise ist die zweite Rückenlehnenstrebe und/oder das zweite Rückenlehnenelement der Rückenlehnentragstruktur in der ersten Nutzposition am Sitzunterbau eingehängt vorhanden. Das Rastelement ist beispielsweise hakenartig, z.B. C- oder U-förmig ausgebildet. Denkbar ist auch, dass das Rastelement als ein magnetisches Element, z.B. als ein Magnet ausgebildet ist. Vorteilhafterweise ist die zweite Rückenlehnenstrebe in der ersten Nutzposition mit einem Ende am Sitzunterbau und/oder an der Anbindungsstruktur aufstehend vorhanden. Beispielsweise ist das Rastelement als ein Stift und/oder ein Bolzen vorhanden. Vorteilhafterweise greift das Rastelement in der ersten Nutzposition in eine Rastöffnung des Sitzunterbaus und/oder der Anbindungsstruktur ein, sodass die Rückenlehnentragstruktur in der ersten Nutzposition lösbar fixiert ist. Das Rastelement ist beispielsweise beweglich, z.B. federvorbelastet an der Rückenlehnenstrebe angeordnet.

In einer vorteilhaften Ausgestaltung des Sitzgestells ist die Rückenlehnentragstruktur rahmenartig ausgebildet. Beispielsweise ist die Rückenlehnentragstruktur als ein Rahmen ausgebildet. Vorteilhafterweise umfasst die Rückenlehnentragstruktur zwei erste Rückenlehnenstreben und zwei zweite Rückenlehnenstreben. Vorteilhafterweise sind die beiden ersten und/oder die beiden zweiten Rückenlehnenstreben beabstandet zueinander ausgebildet. Beispielsweise sind die ersten und/oder die zweiten Rückenlehnenstreben über ein Rahmenelement der Rückenlehnentragstruktur miteinander verbunden. Zum Beispiel ist ein Rückenlehnenelement Bestandteil des Rahmens.

Eine vorteilhafte Ausführungsform der Erfindung ist eine Sitzanordnung eines Fahrzeugs mit einem Sitzgestell gemäß einer der vorgenannten Varianten.

Schließlich richtet sich die Erfindung auf ein Fahrzeug mit einer Sitzanordnung und/oder einem Sitzgestell gemäß einer der vorgenannten Ausbildungen. Das Fahrzeug ist beispielsweise als ein Personenkraftwagen (PKW), als ein Kleinbus, als ein Lastwagen, als ein Wohnmobil oder als ein Camping-Mobil ausgebildet.

### Beschreibung von Ausführungsbeispielen

Mehrere Ausführungsbeispiele werden anhand der nachstehenden schematischen Zeichnungen unter Angabe weiterer Einzelheiten und Vorteile näher erläutert:
Es zeigen:
- Figuren 1 bis 3: eine seitliche Ansicht einer ersten Variante eines Sitzgestells in unterschiedlichen Nutzpositionen,
- Figur 4: eine Frontansicht auf eine weitere Variante eines Sitzgestells mit angeordnetem Sitzflächen- und Rückenlehnenelement,
- Figur 5: eine Rückansicht auf das Sitzgestell gemäß Figur 4,
- Figur 6: eine Seitenansicht auf das Sitzgestell gemäß Figur 4,
- Figuren 7 und 8: eine seitliche Ansicht auf das Sitzgestell gemäß Figur 4, wobei in den Figuren 7 und 8 ein schematischer Verstellablauf des Sitzgestells aus einer ersten Nutzposition in eine zweite Nutzposition dargestellt ist und
- Figuren 9 bis 14: eine seitliche Ansicht auf das Sitzgestell gemäß Figur 4, wobei Schritte des Verstellablaufs gemäß den Figuren 7 und 8 in den einzelnen Figuren dargestellt sind.

Ausführungsformen der nachfolgend beschriebenen Sitzgestellvarianten sind beliebig miteinander kombinierbar. Ein einzelne Ausführungsform einer beschriebenen Sitzgestellvariante kann mit einer weiteren Sitzgestellvariante kombiniert werden, auch wenn eine solche Kombination nachfolgend nicht beschrieben ist. Nachfolgend werden der Einfachheit halber Bezugszeichen von gleichen oder ähnlichen Elementen für unterschiedliche Sitzgestellvarianten einheitlich verwendet.

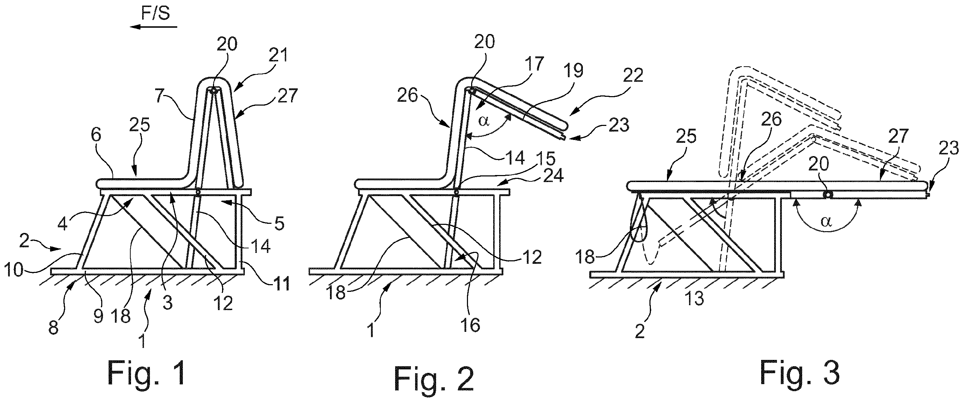

In den Figuren 1 bis 3 ist ein erfindungsgemäßes Sitzgestell 1 mit einem Sitzunterbau 2, einer Sitzflächentragstruktur 3, einer Anbindungsstruktur 4, sowie einer Rückenlehnentragstruktur 5 schematisch gezeigt. An der Sitzflächentragstruktur 3 und an der Rückenlehnentragstruktur 5 sind ein Sitzflächenelement 6 bzw. ein Rückenlehnenelement 7 angeordnet. In der Ausbildung nach den Figuren 1 bis 3 sind das Sitzflächenelement 6 und das Rückenlehnenelement 7 beispielsweise miteinander verbunden, z.B. einstückig ausgebildet. Das Sitzflächenelement 6 und das Rückenlehnenelement 7 sind beispielswiese in der Form eines Sitzpolsters vorhanden. Das Sitzflächenelement 6 und das Rückenlehnenelement 7 sind beispielsweise als ein einstückiges Sitzpolster ausgebildet. Das Sitzgestell 1 bildet zusammen mit dem Sitzflächenelement 6 und dem Rückenlehnenelement 7 einen erfindungsgemäßen Fahrzeugsitz 8.

Aufgrund der schematischen Darstellung ist in den Figuren 1 bis 3 eine Sitzneigung einer Sitzfläche des Sitzflächenelements 6 in der ersten Nutzposition (Figuren 1, 2) nicht ersichtlich. Vorteilhafterweise ist jedoch eine vorhanden.

Der Sitzunterbau 2 umfasst unter anderem ein Anbindungsorgan 9, zwei Sitzunterbaustützen 10, 11 und einen Stützfuß 12. Die Elemente des Sitzunterbaus 2 sind beispielsweise strebenartig ausgebildet, z.B. als Metall- oder Stahlstreben. Beispielsweise ist ein Element als ein Metallrohr, insbesondere als ein Vierkantrohr vorhanden.

Das Anbindungsorgan 9 des Sitzunterbaus 2 erstreckt sich im angeordneten Zustand am Fahrzeug vorteilhafterweise entlang, insbesondere parallel zu einem Fahrzeugboden 13. Das Anbindungsorgan 9 umfasst beispielsweise Verbindungsmittel 36, um den Sitzunterbau 2 positionsfest mit dem Fahrzeugboden 13 zu verbinden.

Die beiden Sitzunterbaustützen 10, 11 des Sitzunterbaus 2 verlaufen vorteilhafterweise zumindestens annähernd vertikal und verbinden das Anbindungsorgan 9 mit der Anbindungsstruktur 4. Der Stützfuß 12 ist vorteilhafterweise zwischen den Sitzunterbaustützen 10, 11 schräg verlaufend angeordnet. Vorteilhafterweise bilden die Sitzunterbaustützen 10, 11 und der Stützfuß 12 eine gemeinsame Stützebene aus. Die Stützebene ist im angeordneten Zustand des Sitzgestells 1 am Fahrzeugboden 13 beispielsweise senkrecht zu einer Erstreckungsebene des Fahrzeugbodens 13 und/oder einer Längserstreckung des Anbindungsorgans 9 ausgerichtet vorhanden. Eine Erstreckungsrichtung der Stützebene ist beispielsweise in vertikaler Richtung vorhanden.

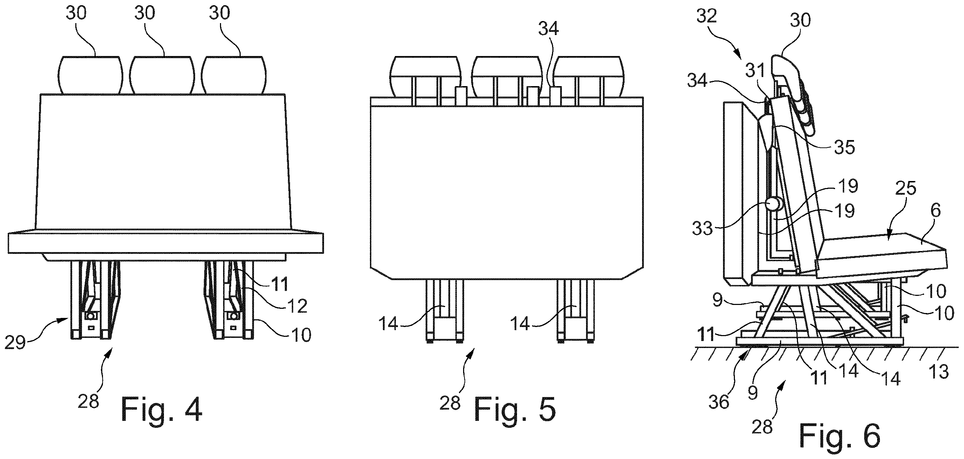

Vorteilhafterweise umfasst der Sitzunterbau 2 zwei, beispielsweise vier vordere Sitzunterbaustützen 10 und zwei, beispielsweise vier hintere Sitzunterbaustützen 11 (Figuren 4 bis 6). Die Sitzunterbaustützen 10, 11 sind beispielsweise mittels der Anbindungsstruktur 4 quer zur Sitzrichtung S gesehen miteinander verbunden. Denkbar ist auch, dass die Sitzunterbaustützen 10, 11 mittels einer Querstrebe (nicht gezeigt), insbesondere zusätzlich zur Anbindungsstruktur 4, miteinander verbunden sind.

Eine erste Rückenlehnenstrebe 14 der Rückenlehnentragstruktur 5 ist vorteilhafterweise schwenkbeweglich, insbesondere drehbar am Sitzunterbau 2 angelenkt. Vorteilhafterweise ist die erste Rückenlehnenstrebe 14 über ein Drehlager 15 drehbeweglich am Sitzunterbau 2 gelagert. Vorteilhafterweise endet in vertikaler Erstreckung gesehen ein erstes Ende 16 der ersten Rückenlehnenstrebe 14 in einem Bereich des Anbindungsorgans 9 und ein zweites Ende 17 der ersten Rückenlehnenstrebe 14 in einem Kopf- oder Schulterbereich des Fahrzeugsitzes 8, welcher durch das Sitzgestell 1 gebildet wird.

Der Sitzunterbau 2 umfasst weiterhin ein Halteorgan, z.B. in Form eines Gurtbands 18. Das Gurtband 18 ist vorteilhafterweise mit einem Ende am ersten Ende 16 der ersten Rückenlehnenstrebe 14 mit der ersten Rückenlehnenstrebe 14 verbunden und mit einem weiteren Ende am Sitzgestell 1 festgelegt. Durch das Gurtband 18 ist eine Schwenkbewegung des ersten Endes 16 der ersten Rückenlehnenstrebe 14 um eine Drehachse des Drehlagers 15 entgegen einer Sitzrichtung S, insbesondere entgegen einer Fahrtrichtung F eines Fahrzeugs, an welchem das Sitzgestell 1 anordenbar ist, begrenzt. Hierdurch ist im Crashfall ein Klappen der Rückenlehne in Sitzrichtung S und damit ein Einklemmen oder Einquetschen eines Nutzers des Sitzgestells 1 zwischen Rückenlehnenelement 7 und Sitzflächenelement 6 verhindert.

Bevorzugterweise umfasst die Rückenlehnentragstruktur 5 eine zweite Rückenlehnenstrebe 19. Die erste und die zweite Rückenlehnenstrebe 14, 19 sind beispielsweise mittels eines Rastscharniers 20 gelenkig miteinander verbunden. Beispielsweise ist die erste Rückenlehnenstrebe 14 am zweiten Ende 17 mit einem ersten Ende 21 der zweiten Rückenlehnenstrebe 19 gelenkig verbunden. Das Rastscharnier 20 ist beispielsweise selbstsichernd, z.B. selbstrastend, ausgebildet, sodass die beiden Rückenlehnenstreben 14, 19 in unterschiedlichen Winkeln α insbesondere rastbar zueinander einstellbar vorhanden sind. Vorteilhafterweise schließen die Längserstreckungen der ersten und der zweiten Rückenlehnenstrebe 14, 19 miteinander einen Winkel α, wobei sich die beiden Längserstreckungen vorteilhafterweise in einem Drehpunkt des Rastscharniers 20 schneiden.

An einem zweiten Ende 22 der zweiten Rückenlehnenstrebe 19 ist ein Rastelement 23 ausgebildet. In einer ersten Nutzposition der zweiten Rückenlehnenstrebe 19 gemäß den Figuren 1, 6 steht die zweite Rückenlehnenstrebe 19 mit dem zweiten Ende 22 vorteilhafterweise auf dem Sitzunterbau 2, z.B. auf der Anbindungsstruktur 4 und/oder der hinteren Sitzunterbaustütze 11 auf. Vorteilhafterweise verrastet das Rastelement 23 in der ersten Nutzposition lösbar, insbesondere automatisch, mit dem Sitzunterbau 2. Beispielsweise umfasst der Sitzunterbau 2 ein Rastorgan 24, welches z.B. als eine Öffnung oder eine Aufnahme ausgebildet ist, mit welchem das Rastelement 23 lösbar verriegelbar ist. Das Rastelement 23 ist beispielsweise beweglich, insbesondere federkraftvorbelastet, z.B. in Form eines beweglichen Bolzens oder Stifts am zweiten Ende 22 der zweiten Rückenlehnenstrebe 19 angeordnet.

Vorteilhafterweise umfasst die Rückenlehnentragstruktur 5 mehrere erste Rückenlehnenstreben 14, z.B. genau zwei oder genau drei erste Rückenlehnenstreben 14. Denkbar ist auch, dass die Rückenlehnentragstruktur 5 mehrere zweite Rückenlehnenstreben 19, z.B. genau zwei oder genau drei zweite Rückenlehnenstreben 19 umfasst. Die mehreren ersten und/oder zweiten Rückenlehnenstreben 14, 19 sind vorteilhafterweise rahmenartig miteinander verbunden. Beispielsweise sind die ersten und/oder zweiten Rückenlehnenstreben 14, 19 mittels des Rückenlehnenelements 7 miteinander verbunden. Vorteilhafterweise ist das Rückenlehnenelement 7 zweiteilig ausgebildet, wobei ein erster Teil des zweiteiligen Rückenlehnenelements 7 mit der ersten Rückenlehnenstrebe 14 verbindbar ist und ein zweiter Teil des zweiteiligen Rückenlehnenelements 7 mit der zweiten Rückenlehnenstrebe 19.

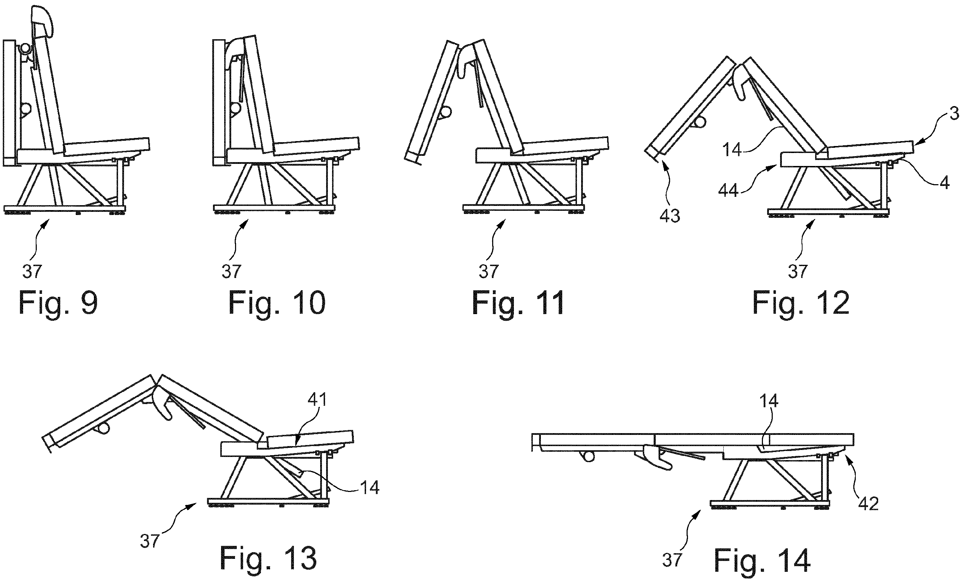

In den Figuren 1 bis 3 (bzw. Figuren 9 bis 14) ist ein Verstellablauf des Sitzgestells 1, 37 aus einer ersten Nutzposition gemäß Figur 1 (bzw. Figur 9) in eine zweite Nutzposition gemäß Figur 2 (bzw. Figuren 10 bis 13) hin zu einer dritten Nutzposition gemäß Figur 3 (bzw. Figur 14) gezeigt (siehe auch Bewegungsablauf entsprechend der Figuren 9 bis 14). In der ersten Nutzposition gemäß Figur 1 befindet sich das Sitzgestell 1 und insbesondere die Rückenlehnenstreben 14, 19 in einer durch das Rastelement 23 verriegelten Position am Sitzgestell 1. Die erste Nutzposition ist gleichzeitig auch eine Sitzposition. In der zweiten Nutzposition ist eine Verriegelung der zweiten Rückenlehnenstrebe 19 mit dem Sitzgestell 1 gelöst und die zweite Rückenlehnenstrebe 19 beispielsweise relativ zur ersten Rückenlehnenstrebe 14 um die Drehachse des Rastscharniers 20 verdreht. Hierdurch ist ein Winkel α zwischen der ersten Rückenlehnenstrebe 14 und der zweiten Rückenlehnenstrebe 19 vergrößert. Durch das Lösen der zweiten Rückenlehnenstrebe 19 aus der verriegelten Position und das Verschwenken der zweiten Rückenlehnenstrebe 19 ist eine Schwenk- und/oder Drehbewegung der ersten Rückenlehnenstrebe 14 um die Achse des Drehlagers 15 freigegeben. In der seitlichen Ansicht des Sitzgestells 1, 37 gemäß der Figuren 1 bis 3 (bzw. der Figuren 9 bis 14) ist hierdurch eine Drehung der ersten Rückenlehnenstrebe 14 im Uhrzeigersinn ermöglicht. Durch Schwenken der ersten Rückenlehnenstrebe 14 und durch ein Weiterbewegen der zweiten Rückenlehnenstrebe 19 relativ zur ersten Rückenlehnenstrebe 14 wird die dritte Nutzposition gemäß Figur 3 (bzw. Figur 14) erreicht. In Figur 3 (bzw. in den Figuren 10 bis 14) ist der Bewegungsablauf hin zur dritten Nutzposition schematisch angedeutet. Die dritte Nutzposition ist gleichzeitig eine Liegeposition des Sitzgestells 1. In der dritten Nutzposition ist eine Liegefläche bestehend aus einer Sitzfläche 25 des Sitzflächenelements 6 und einer Rückenlehnenfläche 26, 27 eingeebnet vorhanden. Das Rastscharnier 20 verrastet die beiden Rückenlehnenstreben 14, 19 in der dritten Nutzposition miteinander, sodass die Längserstreckungen der Rückenlehnenstreben 14, 19 sich parallel zueinander erstrecken. Vorteilhafterweise bildet die zweite Rückenlehnenstrebe 19 in der Liegeposition eine Verlängerung der ersten Rückenlehnenstrebe 14. In der Liegeposition weisen die beiden Rückenlehnenstreben 14, 19 vorteilhafterweise einen Winkel α von etwa 180° zueinander auf. Vorteilhafterweise bilden die mehreren Rückenlehnenstreben 14, 19 in der dritten Nutzposition eine Liegeebene. Die Liegeebene ist vorteilhafterweise als eine Horizontalebene ausgebildet, sodass die Sitzfläche 25 und die Rückenlehnenflächen 26, 27 eine ebene Liegefläche ausbilden.

Die Figuren 4 bis 6 zeigen eine Sitzanordnung mit einer weiteren Variante eines Sitzgestells 29 in Form einer Fahrzeugsitzbank 28. Die Fahrzeugsitzbank 28 ähnelt in den Grundelementen dem vorangegangen beschriebenen Sitzgestell 1. Die Fahrzeugsitzbank 29 umfasst z.B. Kopfstützen 30. Die Kopfstützen 30 sind abnehmbar an der Fahrzeugsitzbank 28 angeordnet. Z.B. sind die Kopfstützen 30 in bekannter Weise in einem oberen Bereich der Fahrzeugsitzbank 28 in entsprechende Aufnahmen 31 der Fahrzeugsitzbank 28 steckbar. Weiter umfasst die Fahrzeugsitzbank 28 bspw. ein Sicherheitsgurtsystem 32 bestehend aus einem Gurtaufroller 33, einem Gurtumlenker 34, einem Gurt 35 und einem Gurtschloss (nicht gezeigt). Der Gurtaufroller 33 ist beispielsweise an der zweiten Rückenlehnenstrebe 19 montiert.

In Figur 6 gezeigt ist, dass in der ersten Nutzposition, der Sitzposition, die Sitzfläche 25 des Sitzflächenelements 6 eine Neigung relativ zum Fahrzeugboden 13 bzw. relativ zu einer Erstreckungsebene der Anbindungsorgane 9 aufweist.

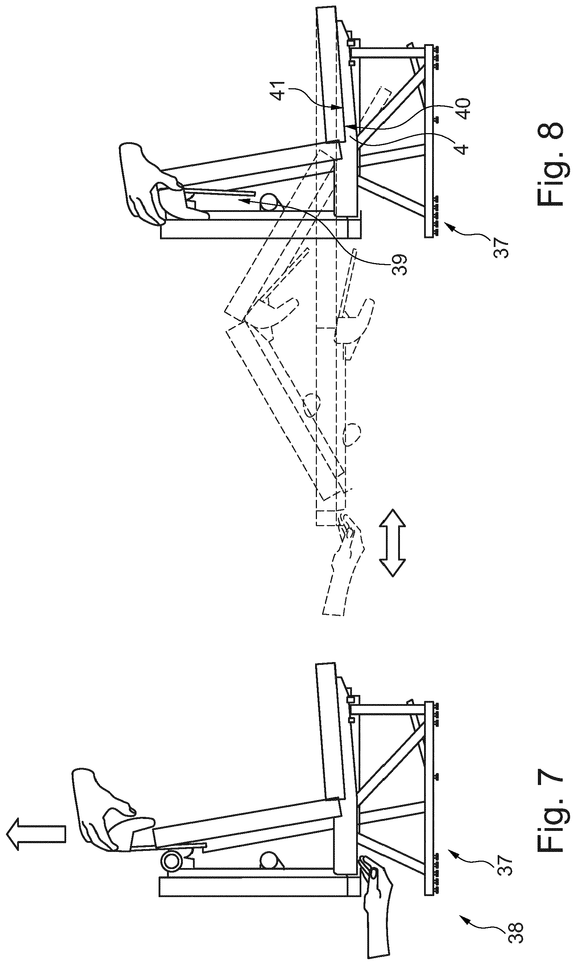

In den Figuren 7 und 8 bzw. 9 bis 14 ist eine weitere Variante eines Sitzgestells 37 in Form eines Fahrzeugsitzes 38 gezeigt. Die Figuren 7 bis 14 zeigen dabei das Sitzgestell 37 in unterschiedlichen Nutzpositionen.

Den Figuren 7 und 8 ist zu entnehmen, dass vor Beginn einer Verstellbewegung der Rückenlehnenstreben 14, 19 aus der Sitzposition in die Liegeposition die Kopfstütze 30 von einer Wirkposition am oberen Ende 17 der ersten Rückenlehnenstrebe 14 zu entfernen ist, um die Verstellbewegung der Rückenlehnenstreben 14, 19 realisieren zu können. Die Kopfstütze 30 kann beispielsweise an einem rückseitigen Aufbewahrungsbereich 39 an der ersten Rückenlehnenstrebe 14 angeordnet und aufbewahrt werden.

Ein Rastelement 43 des Sitzgestells 37 der Figuren 7 bis 14 ist U-förmig, insbesondere klammerartig ausgebildet. Hierdurch ist das Rastelement 43 an einen Endbereich 44 der Anbindungsstruktur 4 klemmbar und/oder einhängbar ausgebildet, wodurch die erste Rückenlehnenstrebe 14 in der Sitzposition fixierbar ist.

In Figur 8 ist weiterhin gezeigt, dass die Anbindungsstruktur 4 eine Ausnehmung 40 aufweist. Die Ausnehmung 40 ist keilartig ausgebildet. In der Sitzposition liegt das Sitzflächenelement 6 an einer Auflagefläche 41 der Ausnehmung 40 an, sodass es eine Neigung relativ zum Fahrzeugboden 13 bzw. relativ zu einer Erstreckungsebene der Anbindungsorgane 9 aufweist.

In der Liegeposition (Figuren 8 und 14) des Sitzgestells 37 greift die erste Rückenlehnenstrebe 14 an die Sitzflächentragstruktur 3 und insbesondere an das Sitzflächenelement 6 an und drängt dabei das Sitzflächenelement 6 aus der ersten Nutzposition (Sitzposition) in die zweite Nutzposition (Liegeposition). Hierbei ist die Sitzflächentragstruktur 3 beispielsweise in einem vorderen Bereich 42 des Sitzgestells 37, insbesondere in einem vorderen Bereich der Anbindungsstruktur 4 beweglich, beispielsweise schwenkbar gekoppelt. Der vordere Bereich der Anbindungsstruktur 4 ist vorteilhafterweise in Sitzrichtung gesehen gegenüberliegend und beabstandet zum Endbereich 44 der Anbindungsstruktur 4 vorhanden.

Beispielsweise greift in der Liegeposition die erste Rückenlehnenstrebe 14 von unten in die Aufnahme 40 ein, sodass die erste Rückenlehnenstrebe 14 an einem unteren Ende des Sitzflächenelements 6 angreift und das Sitzflächenelement 6 an einem Ende in vertikaler Richtung anhebt. Hierdurch ist eine in der Sitzposition vorhandene Neigung des Sitzflächenelements 6, insbesondere der Sitzfläche 25 des Sitzflächenelements 6, relativ zu einer horizontalen Ebene aufgehoben und die Sitzfläche 25 befindet sich ungefähr in einer horizontalen Ebene und bildet mit den Rückenlehnenflächen 26, 27 des Rückenlehnenelements 7 eine plane, ebene Liegefläche aus.

**Bezugszeichenliste**

| | | | |
|---|---|---|---|
| 1 | Sitzgestell | 23 | Rastelement |
| 2 | Sitzunterbau | 24 | Rastorgan |
| 3 | Sitzflächentragstruktur | 25 | Sitzfläche |
| 4 | Anbindungsstruktur | 26 | Rückenlehnenfläche |
| 5 | Rückenlehnentragstruktur | 27 | Rückenlehnenfläche |
| 6 | Sitzflächenelement | 28 | Fahrzeugsitzbank |
| 7 | Rückenlehnenelement | 29 | Sitzgestell |
| 8 | Fahrzeugsitz | 30 | Kopfstütze |
| 9 | Anbindungsorgan | 31 | Aufnahmen |
| 10 | Sitzunterbaustütze | 32 | Sicherheitsgurtsystem |
| 11 | Sitzunterbaustütze | 33 | Gurtaufroller |
| 12 | Stützfuß | 34 | Gurtumlenker |
| 13 | Fahrzeugboden | 35 | Gurt |
| 14 | Rückenlehnenstrebe | 36 | Verbindungsmittel |
| 15 | Drehlager | 37 | Sitzgestell |
| 16 | Ende | 38 | Fahrzeugsitz |
| 17 | Ende | 39 | Aufbewahrungsbereich |
| 18 | Gurtband | 40 | Ausnehmung |
| 19 | Rückenlehnenstrebe | 41 | Auflagefläche |
| 20 | Rastscharnier | 42 | Bereich |
| 21 | Ende | 43 | Rastelement |
| 22 | Ende | 44 | Endbereich |

## Patentansprüche

1. Sitzgestell (1) für eine Sitzanordnung eines Fahrzeugs, wobei das Sitzgestell (1) einen Sitzunterbau (2), eine Sitzflächentragstruktur (3), eine Anbindungsstruktur (4) und eine Rückenlehnentragstruktur (5) aufweist, wobei der Sitzunterbau (2) dazu ausgebildet ist, an einem Fahrzeugboden eines Fahrzeugs angeordnet zu werden, wobei die Sitzflächentragstruktur (3) ausgebildet ist, ein Sitzflächenelement (6) der Sitzanordnung daran zu befestigen, wobei die Sitzflächentragstruktur (3) beweglich am Sitzunterbau (2) und/oder beweglich an der Anbindungsstruktur (4) angelenkt ist, wobei die Rückenlehnentragstruktur (5) dazu ausgebildet ist, ein Rückenlehnenelement (7) der Sitzanordnung daran zu befestigen, wobei die Rückenlehnentragstruktur (5) schwenkbeweglich am Sitzunterbau (2) angelenkt ist,
**dadurch gekennzeichnet, dass**
das Sitzgestell (1) derart vorhanden ist, dass die Rückenlehnentragstruktur (5) aus einer ersten Nutzposition des Sitzgestells (1) in eine zweite Nutzposition des Sitzgestells (1) schwenkbar ist, wobei in der zweiten Nutzposition die Rückenlehnentragstruktur (5) an die Sitzflächentragstruktur (3) angreift und die Sitzflächentragstruktur (3) aus der ersten Nutzposition in die zweite Nutzposition drängt.

2. Sitzgestell (1) für eine Sitzanordnung eines Fahrzeugs nach einem der vorangegangenen Ansprüche, **dadurch gekennzeichnet, dass** die Anbindungsstruktur (4) eine Auflagefläche für die Sitzflächentragstruktur (3) aufweist, wobei eine Rückenlehnenstrebe (14) der Rückenlehnentragstruktur (5) sich in einer ersten Nutzposition quer zu der Auflagefläche der Anbindungsstruktur (4) von einem ersten Strebenende (16) bis zu einem zweiten Strebenende (17) erstreckt, wobei die Rückenlehnenstrebe (14) im Bereich der Auflagefläche schwenkbeweglich am Sitzunterbau (2) angelenkt ist, wobei das erste Strebenende (16) in einem Bereich unterhalb der Auflagefläche vorhanden ist und das zweite Strebenende (17) in einem Bereich oberhalb der Auflageflächen.

3. Sitzgestell (1) für eine Sitzanordnung eines Fahrzeugs nach einem der vorangegangenen Ansprüche, **dadurch gekennzeichnet, dass** die Anbindungsstruktur (4) eine Ausnehmung (40) aufweist, in welche die Sitzflächentragstruktur (3) eingreift und/oder der Sitzunterbau (2) eine Ausnehmung (40) aufweist, in welche die Sitzflächentragstruktur (3) eingreifen kann.

4. Sitzgestell (1) für eine Sitzanordnung eines Fahrzeugs nach einem der vorangegangenen Ansprüche, **dadurch gekennzeichnet, dass** die Sitzflächentragstruktur (3) in der ersten Nutzposition derart am Sitzunterbau (2) gelagert ist, dass ein an der Sitzflächentragstruktur (3) angeordnetes Sitzflächenelement (6) eine Sitzflächenneigung relativ zu einer Horizontalen aufweist.

5. Sitzgestell (1) für eine Sitzanordnung eines Fahrzeugs nach einem der vorangegangenen Ansprüche, **dadurch gekennzeichnet, dass** die Sitzflächentragstruktur (3) in der zweiten Nutzposition derart am Sitzunterbau (2) und an der Rückenlehnentragstruktur (5) gelagert ist, dass eine Sitzfläche (25) des an der Sitzflächentragstruktur (3) angeordneten Sitzflächenelements (6) eine Ebene mit der Horizontalen bildet.

6. Sitzgestell (1) für eine Sitzanordnung eines Fahrzeugs nach dem vorangegangenen Anspruch 3, **dadurch gekennzeichnet, dass** die Rückenlehnenstrebe (14) der Rückenlehnentragstruktur (5) in einer zweiten Nutzposition in die Ausnehmung (40) der Anbindungsstruktur (4) eingreift.

7. Sitzgestell (1) für eine Sitzanordnung eines Fahrzeugs nach einem der vorangegangenen Ansprüche, **dadurch gekennzeichnet, dass** die Rückenlehnentragstruktur (5), insbesondere die Rückenlehnenstrebe (14), in der zweiten Nutzposition in einen Hohlraum des Sitzunterbaus (2) und/oder in einen Hohlraum der Anbindungsstruktur (4) eingreift.

8. Sitzgestell (1) für eine Sitzanordnung eines Fahrzeugs nach einem der vorangegangenen Ansprüche, **dadurch gekennzeichnet, dass** die Rückenlehnentragstruktur (5) zwei Rückenlehnenstreben (14, 19) aufweist, wobei die beiden Rückenlehnenstreben (14, 19) über ein Scharnier (20) miteinander verbunden sind.

9. Sitzgestell (1) für eine Sitzanordnung eines Fahrzeugs nach dem vorangegangenen Anspruch 8, **dadurch gekennzeichnet, dass** die beiden Rückenlehnenstreben (14, 19) in der ersten Nutzposition einen Winkel α kleiner 90° einschließen.

10. Sitzgestell (1) für eine Sitzanordnung eines Fahrzeugs nach einem der vorangegangenen Ansprüche 8 oder 9, **dadurch gekennzeichnet, dass** die beiden Rückenlehnenstreben (14, 19) in der zweiten Nutzposition parallel zueinander ausgerichtet sind.

11. Sitzgestell (1) für eine Sitzanordnung eines Fahrzeugs nach einem der vorangegangenen Ansprüche, **dadurch gekennzeichnet, dass** ein Halteelement (18) vorhanden ist, welches eine Schwenkbewegung einer Rückenlehnenstrebe (14) begrenzt.

12. Sitzgestell (1) für eine Sitzanordnung eines Fahrzeugs nach einem der vorangegangenen Ansprüche, **dadurch gekennzeichnet, dass** an einer Rückenlehnenstrebe (19) der Rückenlehnentragstruktur (5) ein Rastelement (23) vorhanden ist, welches in der Sitzposition, insbesondere der ersten Nutzposition, mit dem Sitzunterbau (2) lösbar verrastet.

13. Sitzgestell (1) für eine Sitzanordnung eines Fahrzeugs nach einem der vorangegangenen Ansprüche, **dadurch gekennzeichnet, dass** die Rückenlehnentragstruktur (5) rahmenartig ausgebildet ist.

14. Sitzanordnung eines Fahrzeugs mit einem Sitzgestell (1) nach einem der vorangegangenen Ansprüche.

15. Fahrzeug mit einer Sitzanordnung nach dem vorangegangenen Anspruch 14 und/oder einem Sitzgestell (1) nach einem der vorangegangenen Ansprüche 1 bis 13.
